# EUROPÄISCHE PATENTSCHRIFT

(11) **EP 2 502 341 B1**
(45) Veröffentlichungstag und Bekanntmachung des Hinweises auf die Patenterteilung: **04.06.2014**
(21) Anmeldenummer: 10805405.7
(22) Anmeldetag: 12.11.2010
(51) Int. Cl.: H02P 7/29, B60R 25/02

(54) **BAUGRUPPE ZUM ANSTEUERN EINES STELLGLIEDES IN EINEM KRAFTFAHRZEUG**
ASSEMBLY FOR ACTUATING AN ACTUATOR IN A MOTOR VEHICLE
ENSEMBLE POUR COMMANDER UN ACTIONNEUR DANS UN VÉHICULE À MOTEUR

(30) Priorität: 16.11.2009 DE 102009044549
(43) Veröffentlichungstag der Anmeldung: 26.09.2012
(73) Patentinhaber: Huf Hülsbeck & Fürst GmbH & Co. KG, 42551 Velbert (DE)
(72) Erfinder: WEBER, Franz-Josef, 40699 Erkrath (DE)
(74) Vertreter: Zenz
(86) Internationale Anmeldenummer: PCT/DE2010/075130
(87) Internationale Veröffentlichungsnummer: WO 2011/057629

(56) Entgegenhaltungen:
- EP-A1- 1 826 078
- WO-A1-2009/010397
- US-A1- 2005 132 765

## Beschreibung

Die Erfindung betrifft eine Baugruppe zum Ansteuern eines Stellgliedes in einem Kraftfahrzeug, welches zwischen einer ersten Endposition und einer zweiten Endposition bewegbar ist.

Insbesondere betrifft die Erfindung eine Baugruppe, die in einem Gehäuse ein Getriebe zum Bewegen des Stellgliedes aufweist, welches von einem Gleichstrommotor angetrieben wird, wobei das Stellglied bei einer Motordrehrichtung von der ersten Endposition in die zweite Endposition und bei der entgegengesetzten Motordrehrichtung von der zweiten Endposition in die erste Endposition bewegt wird und einem Endpositionssensor, welcher erfasst, ob sich das Stellglied in der zweiten Endposition befindet. Eine Steuerschaltung mit einer pulsweiten modulierten (PWM) Motoransteuerschaltung steuert den Gleichstrommotor mit Gleichspannungsimpulsen einer Frequenz von mehr als 1 kHz und bei einem Tastverhältnis zwischen 100 % (Gleichspannung) und einem minimalen Tastverhältnis an, wobei die Steuerschaltung die PWM-Motoransteuerschaltung veranlasst, den Motor eine vorgegebene Zeitdauer bei einem vorgegebenen Tastverhältnis anzusteuern, um ihn von der von dem Endpositionssensor erfassten Endposition in die erste Endposition zu bewegen, wobei die vorgegebene Zeitdauer und/oder das vorgegebene Tastverhältnis von der Betriebsspannung abhängen.

Derartige Baugruppen sind von verschiedenen Kraftfahrzeugbereichen bekannt, insbesondere in dem Bereich von Schließanlagen oder bspw. der elektronischen Lenkungsverriegelung eines Kraftfahrzeugs.

Eine entsprechende Einrichtungen zeigt z.B. die DE 102007024672A1.

Kraftfahrzeuge sind höchst unterschiedlichen Temperaturen während ihrer Betriebszeit ausgesetzt, so können die Umgebungstemperaturen von Kraftfahrzeugen zwischen -40°C und +80°C liegen. Bei derartigen Temperaturunterschieden verändert sich der Widerstand der Motorwicklungen des Gleichstrommotors. Außerdem ändern sich Dimensionen der Getriebebauteile sowie die Reibungsverluste, welche bei der Bewegung mechanischer Bauteile auftreten. Dies führt dazu, dass die Ansteuerung des Antriebsmotors der Umgebungstemperatur angepasst werden sollte, um einen optimierten (bspw. geräuscharmen und/oder energiesparenden) Betrieb des Motorantriebs zu erzielen. WO2009010397 offenbart eine Lenkungsverriegelungsbaugruppe zum Ansteuern eines Sperrbolzens in einem Kraftfahrzeug gemäß dem Stand der Technik.

Es ist wesentlich, dass eine Temperaturkompensation für die Baugruppe stattfindet, da ansonsten eine temperaturunabhängige Ansteuerung zu einem Überschreiten des erforderlichen Fahrweges des Stellgliedes führt (was zu einer Belastung des Getriebes und sonstiger Bauteile führt) oder die Endposition nicht vollständig erreicht wird.

Es ist regelmäßig erforderlich, sämtliche Endlagen mit Lagesensoren zu erfassen, da ansonsten keine verlässlichen Informationen über das Erreichen der Endlagen erhalten werden.

Für eine Temperaturkompensation sind weiterhin komplexe komplexe Schaltungen und Aufbauten bekannt, welche einer Ansteuerungsschaltung Temperaturinformationen übermitteln können, die dann von einem Mikrocontroller verarbeitet werden.

Aufgabe der Erfindung ist es, eine kostengünstige und verlässliche Baugruppe zum Ansteuern von Stellgliedern zur Verfügung zu stellen.

Die erfindungsgemäße Baugruppe weist einen Endpositionssensor auf, der erfasst, ob sich das Stellglied in der zweiten Endposition befindet. Die zweite Endposition kann bspw. die Entriegelungsposition für das Stellglied in einer Schließanlage darstellen. In der Verriegelungsposition ist die erfindungsgemäße Baugruppe nicht auf einen Endpositionssensor angewiesen. Die erfindungsgemäße Baugruppe kann daher mit einem einzigen Erfassungssensor für die Endlagen auskommen, der im Bereich einer der Endpositionen angeordnet ist.

Gemäß der Erfindung weist die Baugruppe einen separaten Temperatursensor auf, der eine Temperatur in dem Gehäuse der Baugruppe ausgibt. Der Temperatursensor soll an einer geeigneten Stelle der Baugruppe angeordnet sein, um die tatsächliche Temperatur der relevanten Bauteile, insbesondere des Motors und des Getriebes zu erfassen. Die Steuerschaltung steuert den Gleich- strommotor in Abhängigkeit von dem Temperatursensorsignal an, wobei die vorgegebene Zeitdauer der Ansteuerung in Abhängigkeit von der Temperatur verändert wird.

Gemäß der Erfindung wird die Temperatur erfasst und die pulsweitenmodulierte (PWM) Motoransteuerung für eine von der Temperatur abhängige Zeitdauer aktiviert. Die Aktivierungsdauer des Motors hängt demnach von der Temperatur ab und kann bspw. durch eine funktionale Beziehung aus dieser abgeleitet werden oder durch Referenzwerte bestimmt werden. Die übrigen Parameter der PWM-Steuerung brauchen nicht angepasst zu werden, da die Kompensation bereits über eine reine Anpassung der Ansteuerungsdauer erfolgen kann. Die einzelnen Pulsweiten und Pulsstärken brauchen nicht angepasst zu werden. Bei einer längeren Ansteuerung werden mehr Pulse übermittelt, bei einer kürzeren entsprechend weniger. Grundsätzlich können jedoch auch zusätzliche, andere Parameter der PWM-Steuerung temperaturabhängig variiert werden.

Erfindungsgemäß findet die Motoransteuerung ohne eine weitere, zweite Sensorauswertung der Endstellung des Stellgliedes statt, da lediglich eine der Endstellungen, üblicherweise die Entriegelungsstellung, mit einem Endpositionssensor erfasst wird.

Auf diese Weise wird selbst dann, wenn die temperaturkompensierte Ansteuerung nicht zu einem optimalen Ergebnis, also zu einem exakten Anfahren des Stellgliedes in die nicht überwachte Endposition geführt hat, beim nächsten Stellzyklus, also z.B. der nächsten Freigabe, die ordnungsgemäße Endlage über den vorhandenen Positionssensor erfasst, wenn das Stellglied zurück in die erste Stellung gelangt.

Die erfindungsgemäße Baugruppe gewährleistet daher jederzeit eine Zwischenkalibrierung über den vorhandenen Endpositionssensor, verzichtet jedoch auf den Endpositionssensor in der zweiten Endlage.

Als Temperatursensor sind beliebige verfügbare Temperatursensorelemente verwendbar, z.B. auch PTC-Widerstände.

In einer bevorzugten Ausführungsform der Erfindung sind sowohl die Zeitdauer als auch das Tastverhältnis der pulsweiten modulierten Steuerung von der Betriebsspannung abhängig. Die Temperatur bestimmt bei dieser vorteilhaften Ausgestaltung die Zeitdauer der Ansteuerung als ein zu berücksichtigender Parameter. Als weiterer Parameter zur Bestimmung der Zeitdauer geht außerdem die von der Steuerschaltung anzulegende Betriebsspannung ein. In Abhängigkeit von diesen Größen wird auch das Tastverhältnis bestimmt. Die Betriebsspannung und das Tastverhältnis bestimmen im Wesentlichen, mit welcher Geschwindigkeit sich der Gleichstrommotor von der einen Endlage in Richtung der anderen Endlage bewegt. Die Zeitdauer bestimmt die Länge des Fahrweges.

Vorteilhafterweise weist die Steuerschaltung einen Mikrocontroller auf, der an einem Eingangsport ein der Temperatur entsprechendes Signal empfängt.

Der Temperatursensor ist mit dem Mikrocontroller gekoppelt und der Temperaturwert daher dem Mikrocontroller unmittelbar zugänglich. Der Mikrocontroller kann mit einem Ausgang zum Ansteuern wenigstens eines zwischen einer Spannungsversorgung und dem Antriebsmotor eingekoppelten Leistungsschaltbauelementes versehen sein, wobei der Mikrocontroller das Leistungsschaltbauelement mit einer Impulsfolge von einem vorgegebenen Tastverhältnis ansteuert. Die genannte Einkoppelung eines Leistungsschaltbauelements zwischen einer Spannungsversorgung und dem Antriebsmotor würde auch die Einkoppelung zwischen Masse und einem Anschluss des Antriebsmotors umfassen. Der Mikrocontroller steuert das Leistungsschaltbauelement in dieser Gestaltung mit einer Pulsfolge eines vorgegebenen Tastverhältnisses an, wobei das Tastverhältnis die dem Antriebsmotor zugeführte Leistung bestimmt, die Ansteuerungsdauer jedoch von der ermittelten Temperatur abhängt. Das Tastverhältnis kann darüber hinaus von der Betriebsspannung abhängen.

In einer bevorzugten Ausführungsform enthält die Steuerschaltung eine Logik, welche in Abhängigkeit von einem der Betriebsspannung entsprechenden ersten Eingabewert und einem der gemessenen Temperatur entsprechenden zweiten Eingabewert einen der vorgegebenen Zeitdauer entsprechenden ersten Ausgabewert und einen dem vorgegebenen Tastverhältnis entsprechenden zweiten Ausgabewert ausgibt.

Die Logik kann in einem Mikrocontroller implementiert sein, der mit einer entsprechenden Firmware versehen ist. Gemäß einer bevorzugten Ausführungsform umfasst die Logik eine Nachschlagtabelle, in der eine funktionale Abhängigkeit bzw. empirische Werte für die Ausgabewerte in Abhängigkeit von dem Eingabewerten hinterlegt sind. Eine derartige Tabelle kann ebenfalls in einer Firmware eines Mikrocontrollers hinterlegt sein.

Gemäß einer Weiterbildung der Erfindung können mehrere Nachschlagetabellen vorgesehen sein, nämlich eine erste Nachschlagetabelle, in welcher mittels der Betriebsspannung entsprechenden ersten Eingabewerten eine vorläufige Zeitdauer hinterlegt ist und in der dem Tastverhältnis entsprechende Ausgabewerte nachgeschlagen werden und eine zweite Nachschlagetabelle, in der mit Hilfe der Temperatur entsprechenden zweiten Eingabewerts ein Wert nachgeschlagen wird, der einer zusätzlichen Zeitdauer entspricht, wobei der vorläufige Zeitdauerwert und der zusätzliche Zeitdauerwert addiert werden, um die ersten Ausgabewert zu gewinnen.

Eine besonders bevorzugte Ausführungsform implementiert die erfindungsgemäße Baugruppe in einer Lenkungsverriegelungsbaugruppe, wobei das Stellglied ein Sperrbolzen ist und die erste Endposition eine Verriegelungsposition des Sperrbolzens ist. Die zweite Endposition ist die Entriegelungsposition des Sperrbolzens und der Endpositionssensor ist ein Entriegelungspositionssensor.

Bei einer derartigen Lenkungsverriegelungsbaugruppe ist es wesentlich, dass die Position des Sperrbolzens in der Entriegelungsposition sicher erfasst wird. Dies ist als sicherheitsrelevante Information erforderlich, um einem Betrieb des Kraftfahrzeuges freizugeben. Die zweite Endposition, also die Sperrposition des Sperrbolzens wird angefahren, indem die Zeitdauer der pulsweiten modulierten Ansteuerung temperaturabhängig kontrolliert wird. Auf diese Weise kann mit der erfindungsgemäßen Baugruppe der Endpositionssensor in der Verriegelungsposition eingespart werden.

Vorteilhafte und bevorzugte Ausführungsformen der Erfindung sind in den Unteransprüchen gekennzeichnet.

Im Folgenden wir die Erfindung anhand eines in der Zeichnung dargestellten bevorzugten Ausführungsbeispiels näher erläutert.

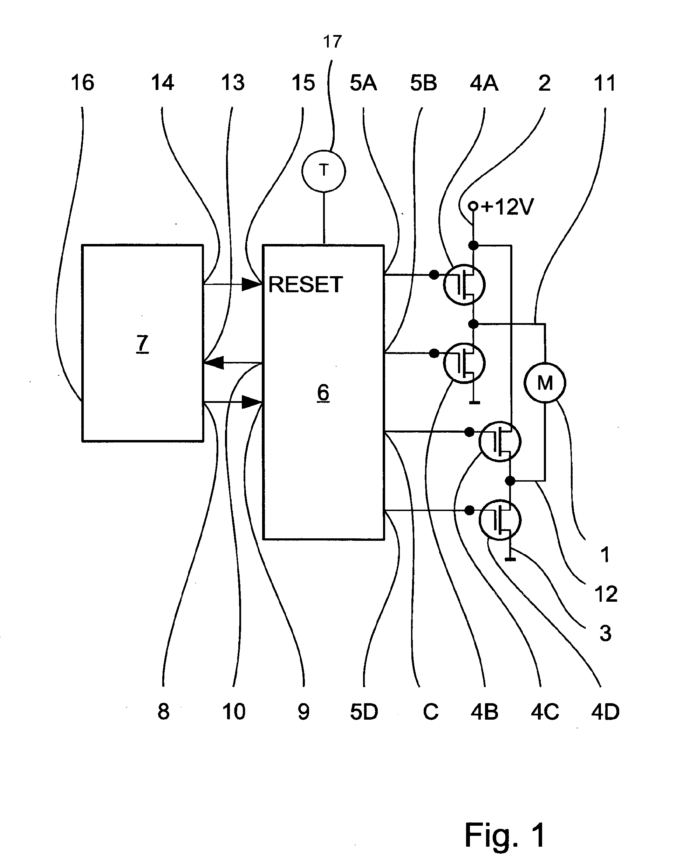

Figur 1 ein Blockschaltbild einer erfindungsgemäßen Baugruppe für eine ELV; und

Figur 1 zeigt eine schematische Darstellung eines Teils einer Ansteuerschaltung für eine elektronische Lenkungsverriegelung (ELV), insbesondere für den Motorantrieb der ELV. Ein Motor 1, der das Getriebe zum Bewegen eines Sperrbolzens für einen Eingriff in eine Lenkradsäule antreibt, ist über Leistungsschaltbauelemente zwischen einer Spannungsversorgung 2 und Masse 3 eingekoppelt. Bei dem in Figur 1 schematisch dargestellten Ausführungsbeispiel können beide Anschlüsse des Motors 1 entweder mit der Spannungsversorgung 2 oder mit Masse 3 gekoppelt werden, so dass der Motor in beiden Richtungen bewegt werden kann. Es sind auch elektronische Lenkungsverriegelungsanordnungen bekannt, bei denen der Motor stets nur in einer Richtung bewegt wird. Bei einer solchen Anordnung kann ein Teil der in Figur 1 gezeigten Leistungsschaltbauelemente entfallen. Wenn sich der Motor 1 nicht bewegen soll, werden beide Anschlüsse des Motors zur Sicherheit mit Masse 3 gekoppelt, d. h., es wird dafür gesorgt, dass die beiden Leistungsschaltbauelemente, die die Motoranschlüsse mit Masse 3 koppeln, eingeschaltet bleiben.

Die Leistungsschaltbauelemente können Relais, bipolare Leistungsschalttransistoren, Thyristoren, Triacs oder - wie in Figur 1 skizziert - Leistungs-FETs sein. Leistungs-FETs haben den Vorteil, dass sie sich (nahezu) leistungslos (stromlos) ansteuern lassen. Bei der in Figur 1 dargestellten Ausführungsform ist ein erster Motoranschluss 11 über einen ersten Leistungs-FET 4A mit der Spannungsversorgung 2 und über einen zweiten Leistungs-FET 4B mit Masse gekoppelt. Ein zweiter Anschluss 12 des Motors 1 ist über einen dritten Leistungs-FET 4C mit der Spannungsversorgung 2 und einen vierten Leistungs-FET 4D mit Masse 3 gekoppelt. Um den Motor in eine erste Richtung anzutreiben, werden die Leistungs-FETs 4A und 4D eingeschaltet, während die beiden verbleibenden Leistungs-FETs 4B und 4C ausgeschaltet sind. Um den Motor in die entgegengesetzte Richtung anzutreiben, werden die Leistungs-FETs 4B und 4C eingeschaltet, während die Leistungs-FETs 4A und 4D ausgeschaltet sind. Im Ruhezustand sind vorzugsweise die Leistungs-FETs 4B und 4D eingeschaltet.

Die vier Leistungs-FETs 4A bis 4D werden von den Steuerausgängen 5A bis 5D eines Mikrocontrollers 6 angesteuert. Der Mikrocontroller 6 enthält üblicherweise einen Mikroprozessor, Speicherbauelemente zum Speichern einer Firmware und eine Reihe von Eingabe- und Ausgabeschaltungen für digitale und analoge Eingangs- bzw. Ausgangssignale. Die Eingabeschaltungen für analoge Eingangssignale enthalten Analog-Digital-Umsetzer und die Ausgabeschaltungen für analoge Signale enthalten Digital-Analog-Umsetzer. Die vier Ausgangsanschlüsse 5A bis 5D zum Ansteuern der Leistungs-FETs 4A bis 4D können digitale Ausgangsanschlüsse sein.

Bei einer bevorzugten Ausführungsform werden die Leistungs-FETs 4A bis 4D während des Einkoppelns des Motors 1 zwischen die Spannungsversorgung 2 und Masse 3 mit einer Folge von Impulsen eines vorgegebenen Tastverhältnisses angesteuert. Die Frequenz der Impulsfolge liegt dabei zwischen 1 kHz und 100 kHz, vorzugsweise zwischen 4 kHz und 20 kHz. Die Frequenz ist so gewählt, dass durch die Motorinduktivität einerseits und die mechanische Trägheit des Motors andererseits eine Mittelung (Glättung) des Motorstroms bzw. der Motorbewegung stattfindet. Das vorgegebene Tastverhältnis bestimmt die Motoransteuerleistung. Wenn beispielsweise bei der einen Motordrehrichtung die Leistungs-FETs 4B und 4C ausgeschaltet bleiben und nur die Leistungs-FETs 4A und 4D angesteuert werden, so können entweder beide Leistungs-FETs 4A und 4D mit den Impulsen mit dem vorgegebenen Tastverhältnis angesteuert werden oder (vorzugsweise) nur der Leistungs-FET 4A mit dem gepulsten Signal angesteuert werden, während der Leistungs-FET 4D dauerhaft eingeschaltet wird.

Der Mikrocontroller 6 weist eine Reihe von (nicht dargestellten) Eingangsanschlüssen auf, die mit Positionserfassungssensoren der ELV gekoppelt sein können. Details der Kopplung und der Funktion sind bekannt und werden hier nicht im Detail beschrieben. Wesentlich für die Erfindung ist, dass für die Erfassung der Endlagen weniger Sensoren benötigt werden, da für die Erfassung der Stellung des Sperrbolzens in der Freigabestellung ein Sensor verwendet wird, jedoch kein Sensor für die Erfassung der Sperrstellung.

Der Mikrocontroller 6 ist mit einer Watchdog-Schaltung 7 gekoppelt. Die Watchdog-Schaltung weist einen ersten Ausgang 8 auf, der mit einem Eingang 9 des Mikrocontrollers 6 gekoppelt ist. An dem ersten Ausgang 8 gibt die Watchdog-Schaltung eine Impulsfolge aus, deren Impulse vorgegebene Abstände haben. Der Mikrocontroller 6 empfängt diese Impulse an seinem (digitalen) Eingang 9, wobei der Empfang des Impulses beispielsweise ein Interrupt auslösen oder durch periodische Abfrage des Zustands des Eingangs 9 erfasst werden könnte. Sobald der Mikrocontroller 6 einen Impuls an seinem Eingang erfasst hat, erzeugt er innerhalb einer vorgegebenen Zeitdauer ein Ausgangssignal, vorzugsweise einen Ausgangsimpuls, an einem Ausgang 10. Dieser innerhalb einer ersten vorgegeben Zeitdauer nach Empfang des Impulses am Eingang 9 über den Ausgang 10 ausgegebene Impuls wird an die Watchdog-Schaltung 7 übermittelt, die einen Eingang 13 aufweist, der mit dem Ausgang 10 des Mikrocontrollers 6 gekoppelt ist. Sofern die Watchdog-Schaltung 7 nach Ausgabe eines Impulses an ihrem ersten Ausgang 8 innerhalb einer zweiten Zeitdauer, die größer als die erste vorgegebene Zeitdauer ist, ein Antwortsignal an ihrem Eingang 13 empfängt, geht sie von einem ordnungsgemäßen Funktionieren des Mikrocontrollers 6 aus. Wird jedoch innerhalb der zweiten vorgegebenen Zeitdauer kein Antwortimpuls an dem Eingang 13 der Watchdog-Schaltung 7 empfangen, so löst die Watchdog-Schaltung 7 ein Rücksetzen des Mikrocontrollers 6 aus, indem sie über einen zweiten Ausgang 14 ein Rücksetz-Signal an einen Rücksetzeingang 15 des Mikrocontrollers 6 anlegt.

Der Mikrocontroller ist mit einem Temperatursensor 17 gekoppelt. Über die Abfrage des Sensors 17 gewinnt der Mikrocontroller 6 eine Information über die Temperatur am Ort des Widerstandsbauelements 17. Das Widerstandsbauelement 17 ist baulich in der Nähe des Antriebs der elektronischen Lenkungsverriegelung derart angeordnet, dass die Temperatur am Ort des Widerstandsbauelements 17 repräsentativ für die Temperatur der elektronischen Lenkungsverriegelung, insbesondere der Temperatur der Umgebung der Motorwicklung und des Getriebes, ist.

Die Dauer der Ansteuerung der Leistungs-Schaltelemente nimmt der Mikrocontroller in Abhängigkeit von der erfassten Temperatur vor. Dies gilt jedenfalls für die Ansteuerung des Motors zum Verfahren des Stellgliedes und des Sperrbolzens aus der überwachten Freigabestellung in die nicht überwachte Sperrstellung. Je nach gewünschter Fahrrichtung des Motors, vorhandener Betriebsspannung und sonstiger Systemparameter wird von dem Mikrocontroller ein Tastverhältnis bei der Betriebsspannung in einer controllergespeicherten Tabelle nachgeschlagen. In Abhängigkeit von der erfassten Temperatur wird außerdem ein Korrekturfaktor für die Ansteuerungsdauer nachgeschlagen oder anhand gespeicherter Rechenvorschriften ermittelt. Dieser Korrekturfaktor gibt an, ob die Ansteuerungszeitdauer aufgrund von der Umgebungstemperatur der Baugruppe verlängert oder verkürzt werden muss, um die gewünschte Endstellung des Stellgliedes bzw. Sperrbolzens der Lenkungsverrieglung zu erreichen, welche ja nicht mit einem Lagesensor überwacht wird. Bei tieferen Temperaturen als einer Richttemperatur (z.B. Richttemperatur von 20°C) wird die Ansteuerungsdauer üblicherweise erhöht, während Sie bei höheren Temperaturen erniedrigt wird. Mit der Veränderung des Ansteuerungsdauer geht eine Erhöhung oder Verringerung der Anzahl der Pulse einher, welche den Motor über die Leistungsbauelemente antreiben.

Bei einer Ansteuerung aus der nicht überwachten Lage zurück in die Freigabestellung des Sperrbolzens kann ebenfalls eine temperaturkompensierte Ansteuerung der Ansteuerungsdauer erfolgen, die Zielstellung wird jedoch anhand des Endlagesensors zusätzlich verifiziert.

Im Rahmen der Erfindung sind eine Reihe alternativer Ausführungsformen denkbar. Beispielsweise könnte ein anderes temperaturabhängiges Bauelement verwendet werden, um die Temperaturabhängigkeit des ausgegebenen Signals herzustellen.

## Patentansprüche

1. Lenkungsverriegelungsbaugruppe zum Ansteuern eines zwischen einer ersten Endposition und einer zweiten Endposition bewegbaren Sperrbolzens in einem Kraftfahrzeug, wobei die erste Endposition die Verriegelungsposition des Sperrbolzens und die zweite Endposition die Entriegelungsposition des Sperrbolzens ist,
wobei die Baugruppe in einem Gehäuse aufweist:
ein von einem Gleichstrommotor (1) angetriebenes Getriebe zum Bewegen des Stellglieds, wobei das Stellglied bei einer Motordrehrichtung von der ersten Endposition in die zweite Endposition und bei der entgegengesetzten Motordrehrichtung von der zweiten Endposition in die erste Endposition bewegt wird,
einen Endpositionssensor, der erfasst, ob sich das Stellglied in der zweiten Endposition befindet, und
eine Steuerschaltung (6) mit einer PWM-Motoransteuerschaltung (4A,B,C,D), die den Gleichstrommotor mit Gleichspannungsimpulsen einer Frequenz über 1 kHz und mit einem Tastverhältnis zwischen 100% (Gleichspannung) und einem minimalen Tastverhältnis ansteuert, wobei die Steuerschaltung die PWM-Motoransteuerschaltung veranlasst, den Motor eine vorgegebene Zeitdauer bei einem vorgegebenen Tastverhältnis anzusteuern, um ihn von der von dem Endpositionssensor erfassten zweiten Endposition in die erste Endposition zu bewegen, wobei die vorgegebene Zeitdauer und/oder das vorgegebene Tastverhältnis von der Betriebsspannung abhängen,
**dadurch gekennzeichnet,**
**dass** die Baugruppe einen separaten Temperatursensor (17) aufweist, der eine Temperatur im Bereich des Motors und des Getriebes in dem Gehäuse erfasst und ein entsprechendes Sensorausgangssignal an die Steuerschaltung ausgibt, und
**dass** die von der Steuerschaltung vorgegebene Zeitdauer von der von dem Temperatursensor erfassten Temperatur abhängt.

2. Baugruppe nach Anspruch 1, **dadurch gekennzeichnet, dass** sowohl die Zeitdauer als auch das Tastverhältnis von der Betriebsspannung abhängen.

3. Baugruppe nach einem der Ansprüche 1 oder 2, **dadurch gekennzeichnet, dass** die Steuerschaltung einen Mikrocontroller aufweist, der an einem Eingangsport ein der Temperatur entsprechendes Signal empfängt.

4. Baugruppe nach einem der Ansprüche 1 - 3, **dadurch gekennzeichnet, dass** die Steuerschaltung eine Logik enthält, die in Abhängigkeit von einem der Betriebsspannung entsprechenden ersten Eingabewert und einem der gemessenen Temperatur entsprechenden zweiten Eingabewert einen der vorgegebenen Zeitdauer entsprechenden ersten Ausgabewert und einen dem vorgegebenen Tastverhältnis entsprechenden zweiten Ausgabewert ausgibt.

5. Baugruppe nach Anspruch 4, **dadurch gekennzeichnet, dass** die Logik eine Nachschlagetabelle umfasst.

6. Baugruppe nach Anspruch 4, **dadurch gekennzeichnet, dass** die Logik umfasst:
eine erste Nachschlagetabelle, in welcher mittels dem der Betriebsspannung entsprechenden ersten Eingabewert ein einer vorläufigen Zeitdauer entsprechender Wert und der dem Tastverhältnis entsprechende zweite Ausgabewert nachgeschlagen werden, und
eine zweite Nachschlagetabelle, in der mit Hilfe des der Temperatur entsprechenden zweiten Eingabewerts ein einer zusätzlichen Zeitdauer entsprechender Wert nachgeschlagen wird,
wobei der der vorläufigen Zeitdauer entsprechende Wert und der der zusätzlichen Zeitdauer entsprechende Wert addiert werden, um den ersten Ausgabewert zu gewinnen.

## Claims

1. A steering lock assembly for actuating a locking pin which is movable between a first end position and a second end position in a motor vehicle, wherein the first end position is the locking position of the locking pin and the second end position is the unlocking position of the locking pin,
wherein the assembly has in a housing:
a gear driven by a direct-current motor (1) for moving the actuator, wherein the actuator is moved on a motor rotation direction from the first end position into the second end position, and on the opposite motor rotation direction is moved from the second end position into the first end position,
an end position sensor, which detects whether the actuator is in the second end position, and
a control circuit (6) with a PWM motor actuation
circuit (4A, B, C, D), which actuates the direct-current motor with direct current impulses of a frequency over 1 kHz and with a duty cycle between 100% (direct current) and a minimum duty cycle, wherein the control circuit causes the PWM motor actuation circuit to actuate the motor for a specified duration at a specified duty cycle, in order to move it from the second end position detected by the end position sensor into the first end position, wherein the specified duration and/or the specified duty cycle depend on the operating voltage,
**characterized in that**
the assembly has a separate temperature sensor (17), which detects a temperature in the region of the motor and of the gear in the housing and emits a corresponding sensor output signal to the control circuit, and
that the duration specified by the control circuit depends on the temperature detected by the temperature sensor.

2. The assembly according to Claim 1, **characterized in that** both the duration and the duty cycle depend on the operating voltage.

3. The assembly according to one of Claims 1 or 2, **characterized in that** the control circuit has a microcontroller which receives at an input port a signal corresponding to the temperature.

4. The assembly according to one of Claims 1 - 3, **characterized in that** the control circuit contains a logic which emits a first output value corresponding to the specified duration and a second output value corresponding to the specified duty cycle as a function of a first input value corresponding to the operating voltage and a second input value corresponding to the measured temperature.

5. The assembly according to Claim 4, **characterized in** the logic comprises a lookup table.

6. The assembly according to Claim 4, **characterized in that** the logic comprises:
a first lookup table, in which by means of the first input value corresponding to the operating voltage, a value corresponding to a provisional duration and the second output value corresponding to the duty cycle are looked up, and
a second lookup table, in which by means of the second input value corresponding to the temperature a value corresponding to an additional duration is looked up,
wherein the value corresponding to the provisional duration and the value corresponding to the additional duration are added, in order to obtain the first output value.

## Revendications

1. Module de verrouillage de direction pour piloter un pêne de blocage (5) déplaçable entre une première position finale et une deuxième position finale dans un véhicule automobile, dans lequel la première position finale est la position de verrouillage du pêne de blocage et la deuxième position finale est la position de déverrouillage du pêne de blocage, dans lequel le module présente dans un logement :
une transmission entraînée par un moteur à courant continu pour déplacer l'actionneur, dans lequel l'actionneur en présence d'une direction de rotation du moteur est déplacé de la première position finale à la deuxième position finale et en présence de la direction de rotation du moteur opposée est déplacé dans la deuxième position finale à la première position finale,
un capteur de position finale, qui détecte si l'actionneur se trouve dans la deuxième position finale, et
un circuit de commande (6) comportant un circuit de pilotage du moteur PWM (4A,B,C,D), qui pilote le moteur à courant continu avec des impulsions de tension continue d'une fréquence supérieure à 1 kHz et avec un rapport cyclique entre 100% (tension continue) et un rapport cyclique minimal, dans lequel le circuit de commande amène le moteur à piloter une durée temporelle prescrite en présence d'un rapport cyclique prescrit, afin de le déplacer de la deuxième position finale détectée par le capteur de position finale à la première position finale, dans lequel la durée temporelle prescrite et/ou le rapport cyclique prescrit dépendent de la tension de fonctionnement,
**caractérisé en ce que** le module présente un capteur de température (17) séparé, qui détecte une température au niveau du moteur et de la transmission dans le logement et émet un signal de sortie de capteur correspondant sur le circuit de commande, et **en ce que** la durée temporelle prescrite par le circuit de commande dépend de la température détectée par le capteur de température.

2. Module selon la revendication 1, **caractérisé en ce que** tant la durée temporelle que le rapport cyclique dépendent de la tension de fonctionnement.

3. Module selon une des revendications 1 ou 2, **caractérisé en ce que** le circuit de commande présente un microcontrôleur, qui reçoit sur un port d'entrée un signal correspondant à la température.

4. Module selon une des revendications 1-3, **caractérisé en ce que** le circuit de commande contient une logique, qui en fonction d'une première valeur d'entrée correspondant à la tension de fonctionnement et d'une deuxième valeur d'entrée correspondant à la température mesurée émet une première valeur de sortie correspondant à la durée temporelle prescrite et une deuxième valeur de sortie correspondant au rapport de cyclique prescrit.

5. Module selon la revendication 4, **caractérisé en ce que** la logique comprend une table de consultation.

6. Module selon la revendication 4, **caractérisé en ce que** la logique comprend :
une première table de consultation, dans laquelle, au moyen de la première valeur d'entrée correspondant à la tension de fonctionnement, une valeur correspondant à une durée temporelle provisoire et la deuxième valeur de sortie correspondant au rapport cyclique sont consultées, et
une deuxième table de consultation, dans laquelle à l'aide de la deuxième valeur d'entrée correspondant à la température, une valeur correspondant à une durée temporelle supplémentaire est consultée,
dans lequel la valeur correspondant à la durée temporelle provisoire et la valeur correspondant à la durée temporelle supplémentaire sont additionnées, afin d'obtenir la première valeur de sortie.
